# EUROPÄISCHE PATENTSCHRIFT

(11) **EP 2 542 766 B1**
(45) Veröffentlichungstag und Bekanntmachung des Hinweises auf die Patenterteilung: **20.05.2015**
(21) Anmeldenummer: 11703181.5
(22) Anmeldetag: 02.02.2011
(51) Int. Cl.: F01N 3/20

(54) **VORRICHTUNG ZUR BEREITSTELLUNG EINES FLÜSSIGEN REDUKTIONSMITTELS**
DEVICE FOR PROVIDING A LIQUID REDUCING AGENT
DISPOSITIF POUR LA PRODUCTION D'UN AGENT RÉDUCTEUR LIQUIDE

(30) Priorität: 05.03.2010 DE 102010010528
(43) Veröffentlichungstag der Anmeldung: 09.01.2013
(73) Patentinhaber: Emitec Gesellschaft für Emissionstechnologie mbH, 53797 Lohmar (DE)
(72) Erfinder: HODGSON, Jan, 53840 Troisdorf (DE); SCHEPERS, Sven, 53844 Troisdorf (DE)
(74) Vertreter: Rössler, Matthias
(86) Internationale Anmeldenummer: PCT/EP2011/051435
(87) Internationale Veröffentlichungsnummer: WO 2011/107312

(56) Entgegenhaltungen:
- WO-A1-2008/138960
- DE-A1-102006 061 735
- DE-A1-102007 041 524
- DE-A1-102008 041 723

## Beschreibung

Die Erfindung betrifft eine Vorrichtung zur Bereitstellung von flüssigem Reduktionsmittel. Insbesondere betrifft die Erfindung eine Vorrichtung nach Art eines Tanks zur Bereitstellung von flüssigem Reduktionsmittel mit einer besonders effizienten Heizung, mit der gefrorenes Reduktionsmittel wieder geschmolzen werden kann.

Zur Reinigung der Abgase von Verbrennungskraftmaschinen und insbesondere von mobilen Verbrennungskraftmaschinen wird häufig das SCR-Verfahren eingesetzt. Mit dem SCR-Verfahren können Stickoxidverbindungen (NOₓ) im Abgas einer Verbrennungskraftmaschine wirkungsvoll reduziert werden. Dem Abgas der Verbrennungskraftmaschine wird dazu ein Reduktionsmittel zugeführt. Dieses Reduktionsmittel ist beispielsweise Ammoniak. Ammoniak kann in einem Kraftfahrzeug nur sehr schlecht direkt bevorratet werden. Deswegen werden regelmäßig Ammoniakvorläufer bevorratet, welche dann während des Betriebes der Verbrennungskraftmaschine in den benötigten Mengen zu Ammoniak (NH₃) umgesetzt werden. Ein solcher besonders häufig zum Einsatz kommender Reduktionsmittelvorläufer ist wässrige Harnstofflösung (CH₄N₂O). Eine wässrige Lösung mit einem Harnstoffgehalt von 32,5 Prozent ist unter dem Handelsnamen *AdBlue* erhältlich und hat einen sehr hohen Verbreitungsgrad. Reduktionsmittelvorläufer werden im Folgenden auch vereinfachend als Reduktionsmittel bezeichnet.

Im Kraftfahrzeug erfolgt die Bevorratung von Reduktionsmittel regelmäßig in einem separaten Tank. Problematisch hierbei ist, dass das Reduktionsmittel bei Temperaturen einfriert, die durchaus während des Betriebes auftreten können. Eine übliche Harnstoff-Wasser-Lösung friert beispielsweise bei Temperaturen von -11 °C ein. Derartig niedrige Temperaturen können in Tanks in Kraftfahrzeugen insbesondere bei langen Stillstandszeiten auftreten.

Die Förderung des Reduktionsmittels aus dem beschriebenen Tank in das Abgassystem der Verbrennungskraftmaschine kann folglich erst störungsfrei funktionieren, wenn das Reduktionsmittel im Tank in einem ausreichenden Maße flüssig zur Verfügung steht. Aus diesem Grunde ist es üblich, den Tank für das Reduktionsmittel mit einer Heizung zu versehen, so dass das Reduktionsmittel im Tank geschmolzen werden kann, wenn es eingefroren ist. Eine derartige Heizung sollte das Reduktionsmittel möglichst schnell und zuverlässig unter allen denkbaren Betriebsbedingungen (gezielt) aufheizen und möglichst wenig Energie verbrauchen.

Aus der WO 2001/138960 A1 geht ein Heizkörper hervor, der bewegbare Heizelemente aufweist. Diese beweglichen Heizelemente können an die geometrischen Anforderungen verschieden ausgeformter Reduktionsmitteltanks angepasst werden.

Aus der DE 10 2006 061 735 A1 geht eine Belüftunssheizung für einen Reduktionsmitteltank hervor. Damit kann auch während eines partiellen Einfrierens des Reduktionsmitteltanks ein Druckausgleich zu einem eingeschlossenen, bereits verflüssigen Reduktionsmittel während der Förderung ermöglicht werden.

Aus der DE 10 2007 041 524 A1 ist eine Tank für ein Medium zum Einsatz in einer Abgasnachbehandlungsanordnung bekannt, in welchem ein Schwimmkörper angeordnet ist der einen Heizkopf trägt mit dem eingefrorenes Medium in dem Tank aufgeschmolzen werden kann. An dem Schwimmkörper ist auch eine Saugleitung befestigt, mit der flüssiges Medium aus dem Tank entnommen werden kann.

Ausgehend von diesem Stand der Technik ist es Aufgabe der hier vorliegenden Erfindung, die im Zusammenhang mit dem Stand der Technik geschilderten technischen Probleme zumindest zu lindern. Es soll insbesondere eine geeignete Vorrichtung zur Bereitstellung von flüssigem Reduktionsmittel sowie ein entsprechendes Verfahren zum Auftauen von gefrorenem Reduktionsmittel angegeben werden.

Diese Aufgaben werden gelöst mit einer Vorrichtung gemäß den Merkmalen des Patentanspruchs 1 sowie einem Verfahren gemäß den Merkmalen des Patentanspruchs 8. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung zur Bereitstellung eines flüssigen Reduktionsmittels umfasst einen Reduktionsmitteltank zur Bevorratung des flüssigen Reduktionsmittels, welcher mindestens eine Heizung aufweist, wobei die mindestens eine Heizung beweglich in dem Reduktionsmitteltank angeordnet und als aktive Heizung ausgeführt ist und wobei die Vorrichtung eine aktive Belüftungsheizung zur Ausbildung eines Kanals zwischen der mindestens einen Heizung und einer Entnahmestelle für Reduktionsmittel aufweist.

Eine derartige Vorrichtung weist bevorzugt auch eine Dosiereinheit auf, mit welcher das flüssige Reduktionsmittel aus dem Reduktionsmitteltank zu einer Abgasbehandlungsvorrichtung gefördert werden kann. Hierfür können Leitungen für den Transport des Reduktionsmittels, Ventile, Pumpen, Filter, etc. vorgesehen sein. Weiter ist möglich, dass zumindest ein Teil der Dosiereinheit an bzw. im Reduktionsmitteltank angeordnet ist, wobei die Dosiereinheit ggf. durch einen Abschnitt der Tankwand vom Reduktionsmittel abgetrennt ist. Der Reduktionsmitteltank ist bevorzugt mit einem Kunststoff gebildet, auch wenn dies nicht zwingend erforderlich ist. Weiter können eine Befüllungsöffnung, Sensoren, Verschlüsse, Unterteilungen, Wärmeisolierungen, etc. bei dem Reduktionsmitteltank vorgesehen sein.

Eine "aktive" Heizung im Sinne der hier vorliegenden Erfindung ist insbesondere eine selbstwärmende Heizung, die Wärmeenergie in den Reduktionsmitteltank einbringt und nicht lediglich zur Verteilung der Wärmeenergie beiträgt. Eine derartige aktive Heizung kann beispielsweise (gezielt zu vorgegebenen Zeitpunkten) elektrisch betrieben werden. Auch eine Heizung, die Wärmeenergie von Kühlwasser einer Verbrennungskraftmaschine in den Reduktionsmitteltank einbringt, wird als eine aktive Heizung angesehen. Vorzugsweise wandelt die aktive Heizung eine bestimmte Energieform (beispielsweise elektrische oder mechanische Energie) in Wärme um. Eine aktive Heizung ist insbesondere auch dadurch charakterisiert, dass sie nicht passiv, also nur wärmeleitend, ist.

Die bewegliche Anordnung der aktiven Heizung im Reduktionsmitteltank ermöglicht, dass die Heizung bei unterschiedlichen Füllständen des Reduktionsmittels im Reduktionsmitteltank jeweils in der Nähe des Reduktionsmittels angeordnet sein kann. Insbesondere kann die Heizung jeweils in der Nähe des Füllstandes bzw. der Oberfläche im Reduktionsmitteltank angeordnet sein. Wenn das Reduktionsmittel im Tank bereits teilweise flüssig und teilweise noch gefroren ist, kann die bewegliche Heizung in die Nähe des gefrorenen Reduktionsmittels angeordnet sein, so dass eine besonders effiziente Wärmeeinbringung in das gefrorene Reduktionsmittel erfolgen kann. Bevorzugt ist, dass eine geführte Bewegung der aktiven Heizung erfolgt, so dass diese z. B. in dem Bewegungsumfang beschränkt ist. Dies kann beispielsweise bedeuten, dass die aktive Heizung nur in vorgegebenen Dimensionen bzw. Richtungen beweglich ist, und/oder dass eine Entfernung von einem Referenzpunkt nur in einem begrenzten Umfang ermöglicht ist. Hiermit kann beispielsweise sichergestellt werden, dass eine Verbindung der aktiven Heizung mit der Energiequelle (z B. einer Stromquelle) auch unter ungünstigen Bedingungen im Reduktionsmitteltank besteht.

Die bewegliche Anordnung einer aktiven Heizung führt also insbesondere dazu, dass die aktive Heizung unabhängig vom aktuellen Füllstand bzw. der aktuellen Lage des Reduktionsmittels gezielt (räumlich begrenzt) genau dort positioniert ist, wo die Wärme direkt in das gefrorene Reduktionsmittel eingebracht werden kann, ohne dass erhebliche Mengen flüssigem Reduktionsmittel und/oder ein Gas den Wärmeübergang signifikant behindern.

An der Entnahmestelle entnimmt die Dosiereinheit dem Reduktionsmitteltank das Reduktionsmittel. Die Position der Entnahmestelle im Reduktionsmitteltank ist fest vorgegeben. Die Entnahmestelle ist in der Nähe des Tankbodens angeordnet. Dies ermöglicht die Entnahme von Reduktionsmittel auch bei niedrigen Füllständen. Die Heizung ist regelmäßig mit einem Abstand zur Entnahmestelle angeordnet. Insbesondere bei hohen Füllständen ist die Heizung regelmäßig oben im Tank angeordnet während die Entnahmestelle sich in der Nähe des Tankbodens befindet. Deshalb ist es vorteilhaft, wenn zusätzlich zur Heizung eine Belüftungsheizung vorgesehen ist, die schnell in das gefrorene Reduktionsmittel einen (gas- und/oder flüssigkeitsdurchlässigen) Kanal von der Heizung hin zu der Entnahmestelle schmelzen kann. In der Umgebung der Heizung wird normalerweise eine große Menge an Reduktionsmittel aufgeschmolzen. Dieses Reduktionsmittel kann dann durch den Kanal zur Entnahmestelle gelangen - ebenso kann ein Gasausgleich zwischen beabstandeten und vom gefrorenen Reduktionsmittel getrennten Bereichen des Reduktionsmitteltanks erreicht werden.

In der erfindungsgemäßen Vorrichtung ist die mindestens eine Heizung als Schwimmkörper ausgeführt. Die Heizung schwimmt in der Nähe einer Oberfläche und/oder des Füllstandes, wenn das Reduktionsmittel (teilweise) flüssig ist. Wenn das Reduktionsmittel gefroren ist, bleibt die Heizung in dieser Position. Die Heizung befindet sich so bei unterschiedlichen Füllständen immer in der Nähe des Reduktionsmittels. Wenn in der Umgebung der aktiven Heizung gefrorenes Reduktionsmittel aufgeschmolzen wurde, kann das aufgeschmolzene flüssige Reduktionsmittel effizient Wärme per Konvektion von der Heizung an das noch gefrorene Reduktionsmittel übertragen. Ebenso ist es der aktiven Heizung z. B. möglich, dass sie sich (erneut) wieder hin in Richtung des (noch) gefrorenen Anteils an Reduktionsmittel bewegt. Die aktive Heizung kann selbst als Schwimmkörper ausgebildet sein und/oder mit mindestens einem Schwimmkörper verbunden sein bzw. zusammenwirken. Gegebenenfalls ist es auch möglich, dass mehrere Heizungen mit einem einzelnen Schwimmkörper zusammenwirken, bevorzugt ist jedoch, dass jede Heizung mit einem zugehörigen (separaten) Schwimmkörper ausgebildet ist. Ein Schwimmkörper ist regelmäßig ein Gegenstand, der aufgrund seines Auftriebs durch Verdrängung nach dem Archimedischen Prinzip selbständig schwimmfähig ist. Schwimmkörper, die nicht aus einem von sich aus schwimmfähigen Material bestehen, können z. B. mit Kammern ausgebildet sein, in denen Luft und/oder mit einem leichten Feststoff vorgesehen ist.

In einer weiteren vorteilhaften Ausgestaltung der erfindungsgemäßen Vorrichtung weist die mindestens eine Heizung zumindest einen Heizabschnitt und zumindest einen Auftriebsabschnitt auf. Durch einen derartigen zweigeteilten Aufbau der Heizung kann sichergestellt sein, dass der Heizabschnitt jeweils vollständig von Reduktionsmittel umgeben ist, während der Auftriebsabschnitt die Position der Heizung im Reduktionsmitteltank bestimmt. Insbesondere gibt der Auftriebsabschnitt die Position der Heizung in der Nähe des Füllstandes bzw. einer Oberfläche des Reduktionsmittels vor. Dadurch, dass der Heizabschnitt vollständig von Reduktionsmittel umgeben ist, wird Wärme effizient in das Reduktionsmittel eingebracht. Bevorzugt ist demnach, dass der mindestens eine Heizabschnitt außen hin zum Reduktionsmittel und der mindestens eine Auftriebsabschnitt innen bzw. ohne direkten Kontakt zum Reduktionsmittel angeordnet sind.

In einer besonders vorteilhaften Ausgestaltung der vorstehenden Vorrichtung weist die mindestens eine Heizung eine Zuleitung zur Versorgung der Heizung mit Energie auf, wobei auch an der Zuleitung eine aktive Belüftungsheizung vorgesehen ist. Die aktive (elektrische) Heizung muss zum Heizen des Reduktionsmittels mit Energie versorgt werden und benötigt dazu eine Zuleitung. Meist ist in der Zuleitung zumindest ein elektrischer Leiter vorgesehen. Die Belüftungsheizung kann demnach z. B. auch als Heizleiter in der Zuleitung ausgeführt sein. Die (zumindest teilweise starre und/oder flexible) Zuleitung kann beispielsweise von einem Ort im Reduktionsmitteltank in der Nähe der Entnahmestelle aus hin zu der Heizung verlaufen. Wenn die Zuleitung eine Belüftungsheizung aufweist, ermöglicht dies die Ausbildung eines Kanals zwischen der Heizung und der Entnahmestelle in dem gefrorenen Reduktionsmittel.

Auch vorteilhaft ist die erfindungsgemäße Vorrichtung, wenn an der mindestens einen Heizung mindestens eine Komponente zur Detektierung des Füllstandes des Reduktionsmittels im Reduktionsmitteltank vorgesehen ist. Die aktive Heizung stellt regelmäßig einen großflächigen Schwimmer im Reduktionsmitteltank dar. Die Position der Heizung ist je nach Füllstand unterschiedlich. Aus diesem Grund kann die Position der Heizung besonders vorteilhaft zur Detektierung des Füllstandes verwendet werden.

Weiterhin ist bevorzugt, wenn die mindestens eine Heizung zur Bestimmung des Füllstandes im Reduktionsmitteltank die Oberfläche des Reduktionsmittels zu einem Anteil von mehr als 50 % bedeckt, vorzugsweise mehr als 80 % und besonders bevorzugt mehr als 90 %. Zum Schwappen des Reduktionsmittels im Reduktionsmitteltank ist regelmäßig eine freie Oberfläche des Reduktionsmittels erforderlich. Wenn die Heizung die Oberfläche des Reduktionsmittels im Reduktionsmitteltank großflächig bedeckt, kann dass Schwappen im Reduktionsmitteltank wirkungsvoll reduziert werden. Schwappbewegungen im Reduktionsmitteltank sind für die genaue Bestimmung des Füllstandes im Reduktionsmitteltank sehr nachteilig, weil sie zu wechselnden Füllstandsignalen führen.

Die erfindungsgemäße Vorrichtung ist auch vorteilhaft, wenn im Reduktionsmitteltank eine Führungsstruktur für die mindestens eine Heizung vorgesehen ist, entlang welcher die mindestens eine Heizung bewegbar ist. Durch eine derartige Führungsstruktur kann gewährleistet werden, dass die Heizung nicht unkontrolliert im Reduktionsmitteltank beweglich ist. So kann beispielsweise auch verhindert werden, dass die Heizung gegen ein Entnahmerohr für das Reduktionsmittel und/oder gegen die Tankwand des Reduktionsmitteltankes und/oder einen Sensor schlägt und so unerwünschte Geräusche und/oder Schäden verursacht. Ebenso ist hier möglich, dass ein Entnahmerohr für ein Reduktionsmittel aus einem Reduktionsmitteltank gleichzeitig die Führungsstruktur für die Heizung bildet.

Gemäß einer weiteren vorteilhaften Ausgestaltung der erfindungsgemäßen Vorrichtung ist die mindestens eine Heizung derart angeordnet oder geformt, dass im Betrieb auf einer gefrorenen Reduktionsmitteloberfläche eine Ablauffläche für abgetautes Reduktionsmittel gebildet wird. Das durch die Heizung abgetaute Reduktionsmittel muss regelmäßig in Richtung der Entnahmestelle für Reduktionsmittel gelangen können. Dazu wird hier eine geeignete Anordnung und/oder Form der Heizung angegeben, die geeignet ist, die Oberfläche des gefrorenen Reduktionsmittels so zu formen, dass eine Ablauffläche bzw. mindestens eine Ablaufrinne gebildet ist. Vorzugsweise läuft die gefrorene Reduktionsmitteloberfläche etwa trichterförmig auf die Entnahmestelle und/oder den Beginn des Kanals hin zu.

Die aktive bewegliche Heizung kann folglich insgesamt trichterförmig geformt sein. Alternativ oder zusätzlich dazu kann die Heizung Rippen aufweisen. Die Rippen können die gefrorene Reduktionsmitteloberfläche beim Auftauen derart strukturieren, dass das abgetaute Reduktionsmittel in Richtung zur Entnahmestelle und/oder zum Beginn des Kanals der Belüftungsheizung ablaufen kann. Durch eine derartige Ablauffläche für abgetautes Reduktionsmittel soll insbesondere auch sichergestellt werden, dass Reduktionsmittel auch bei einer Schrägfahrt des Kraftfahrzeuges schnell und vollständig zur Entnahmestelle gelangt.

Gemäß einem weiteren Aspekt der Erfindung wird auch ein Verfahren zum Auftauen von gefrorenem Reduktionsmittel in einem Reduktionsmitteltank vorgeschlagen, welches zumindest die folgenden Schritte aufweist:
a) Bewegliches Anordnen mindestens einer aktiven Heizung nahe einer Reduktionsmitteloberfläche;
b) Aktivieren und Bewegen der mindestens einen Heizung, wenn das Reduktionsmittel an der Reduktionsmitteloberfläche gefroren ist;
c) Abtauen von Reduktionsmittel an der Reduktionsmitteloberfläche und Bewegen der mindestens einen Heizung; und
d) Zuführen des abgetauten Reduktionsmittels zu einer Entnahmestelle für däs Reduktionsmittel,
eine aktive Belüftungsheizung der Vorrichtung einen Kanal zwischen der mindestens einen Heizung und der Entnahmestelle für Reduktionsmittel ausbildet wobei die Entnahmestelle fest in der Nähe des Tankbodens in dem Reduktionsmitteltank positioniert ist.

Die Schritte a) bis d) des erfindungsgemäßen Verfahrens werden typischerweise kontinuierlich wiederholt. Häufig laufen die Schritte a) bis d) auch jeweils kontinuierlich und zeitlich parallel zueinander ab. Während die Heizung aktiviert ist (Schritt b)), bewegt sie sich auch weiter in Richtung der Reduktionsmitteloberfläche (Schritt a)). Gleichzeitig wird Reduktionsmittel an der Reduktionsmitteloberfläche abgetaut (Schritt c)) und der Entnahmestelle für das Reduktionsmittel zugeführt (Schritt d)). Durch das erfindungsgemäße Verfahren bringt die Heizung immer genau dort Wärme in das Reduktionsmittel ein, wo auch gefrorenes Reduktionsmittel vorliegt. Dies erhöht die Effektivität der Heizung. Gleichzeitig wird so sicher gestellt, dass die Heizung immer dazu in der Lage ist das Reduktionsmittel aufzutauen.

Die für die erfindungsgemäße Vorrichtung und für das erfindungsgemäße Verfahren jeweils einzeln dargestellten Vorteile und besonderen Ausgestaltungen sind sowohl für das Verfahren als auch für die Vorrichtung anwendbar. Das erfindungsgemäße Verfahren wird mit einer erfindungsgemäßen Vorrichtung durchgeführt.

Die Erfindung findet bevorzugt Anwendung bei einem Kraftfahrzeug, aufweisend eine Verbrennungskraftmaschine und eine Abgasbehandlungsvorrichtung, aufweisend eine Zufuhr für Reduktionsmittel sowie eine erfindungsgemäßen Vorrichtung. Das erfindungsgemäße Kraftfahrzeug ist insbesondere auch zur Durchführung des erfindungsgemäßen Verfahrens eingerichtet. Dieses technische Umfeld wird anhand der Figuren näher dargestellt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Auch ist darauf hinzuweisen, dass die Figuren und insbesondere die dargestellten Größenverhältnisse schematisch sind, wobei gleiche Bauteile mit gleichen Bezugszeichen versehen sind. Es zeigen:
- Fig. 1:: eine erste Ausführungsvariante einer erfindungsgemäßen Vorrichtung,
- Fig. 2:: eine zweite Ausführungsvariante einer erfindungsgemäßen Vorrichtung,
- Fig. 3:: eine dritte Ausführungsvariante einer erfindungsgemäßen Vorrichtung,
- Fig. 4:: eine vierte Ausführungsvariante einer erfindungsgemäßen Vorrichtung,
- Fig. 5:: eine fünfte Ausführungsvariante einer erfindungsgemäßen Vorrichtung,
- Fig. 6:: eine sechste Ausführungsvariante einer erfindungsgemäßen Vorrichtung,
- Fig. 7:: eine siebte Ausführungsvariante einer erfindungsgemäßen Vorrichtung,
- Fig. 8:: ein Detail der siebten Ausführungsvariante der erfindungsgemäßen Vorrichtung,
- Fig. 9:: eine Ansicht der ersten Ausführungsvariante der erfindungsgemäßen Vorrichtung von oben, und
- Fig. 10:: ein Kraftfahrzeug, aufweisend eine erfindungsgemäße Vorrichtung.

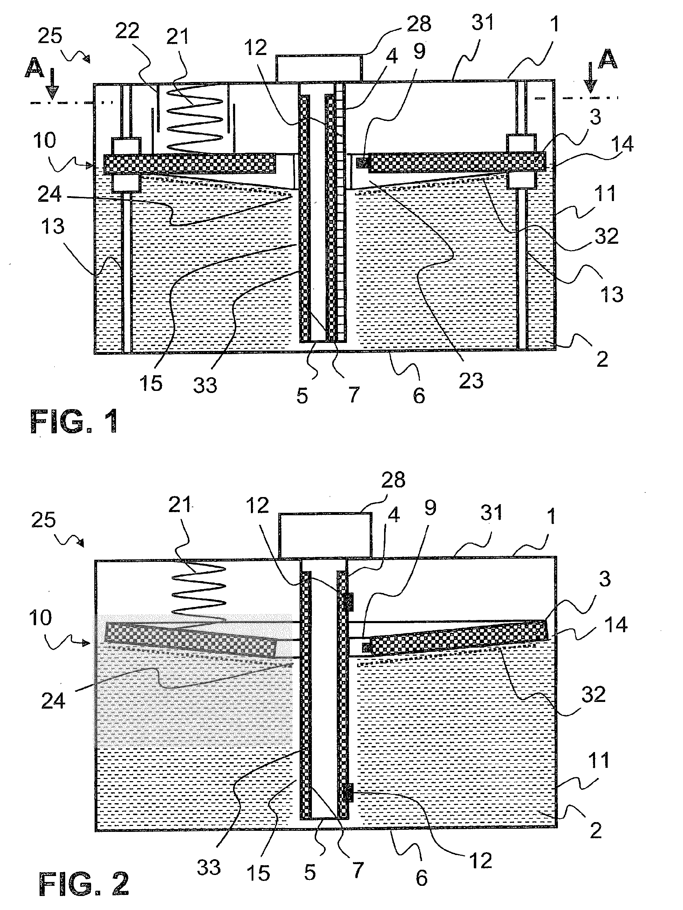

Die Fig. 1 bis 7 zeigen verschiedene Ausführungsvarianten der erfindungsgemäßen Vorrichtung 25, deren gemeinsame Merkmale hier zusammen beschrieben werden. Die erfindungsgemäße Vorrichtung 25 weist jeweils einen Reduktionsmitteltank 1 auf, der bis zu einem Füllstand 10 mit Reduktionsmittel 2 gefüllt ist. In der Nähe des Tankbodens 6 ist jeweils eine Entnahmestelle 5 zur Entnahme von Reduktionsmittel 2 aus dem Reduktionsmitteltank 1 angeordnet. Das Reduktionsmittel 2 gelangt jeweils von der Entnahmestelle 5 zu der Dosiereinheit 28. Die Dosiereinheit 28 ist dafür zuständig, das Reduktionsmittel 2 zu einer Abgasbehandlungsvorrichtung zu transportieren. Alle Ausführungsvarianten der Fig. 1 bis 7 haben gemeinsam, dass im Reduktionsmitteltank 1 mindestens eine bewegliche aktive Heizung 3 angeordnet ist, die auf dem Reduktionsmittel 2 oder in dem Reduktionsmittel 2 schwimmt. Die elektrische Heizung 3 wird über eine elektrische Zuleitung 21 mit Energie versorgt (bei einer anderen Art der aktiven Heizungen kann eine entsprechende Art der Zuleitung (z. B. über Heißwasser, etc.) realisiert sein).

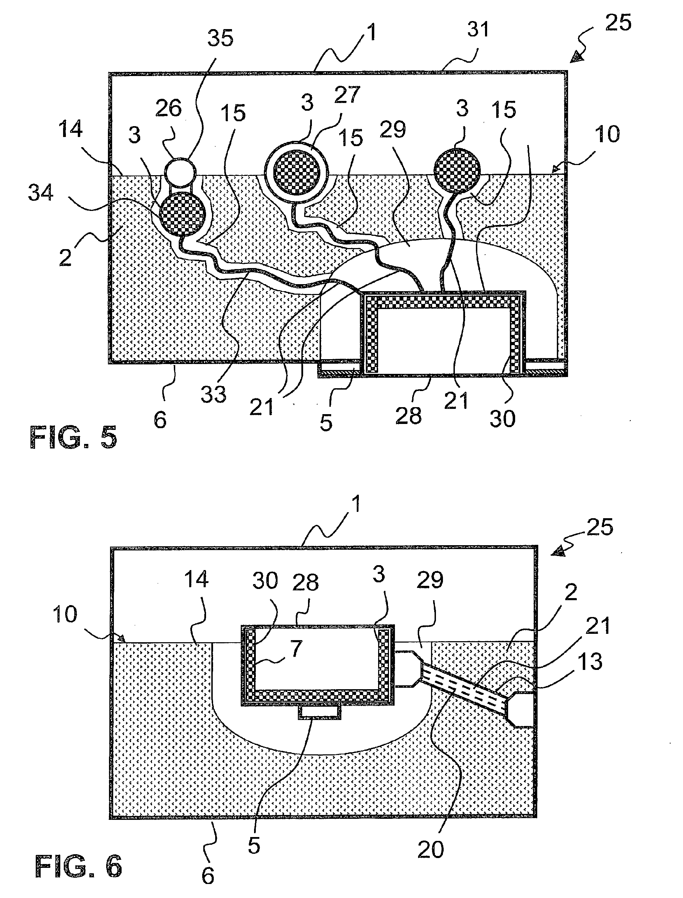

Die Zuleitung 21 kann gefährdet sein, wenn sie von flüssigem Reduktionsmittel 2 umgeben ist. Durch die Ausdehnung des Reduktionsmittels 2 beim Einfrieren kann die Zuleitung 21 unter ungünstigen Umständen reißen. Aus diesem Grund ist die Zuleitung 21 bei den Ausführungsvarianten der Fig. 1, 2, 3, 4 und 7 so geführt, dass sie oberhalb des Füllstandes 10 des Reduktionsmittels 2 im Reduktionsmitteltank 1 liegt. Die Fig. 1 zeigt zusätzlich eine Schutzvorrichtung 22, durch welche die Zuleitung 21 geschützt wird. Gemäß den Fig. 5 und 6 ist eine Führung der Zuleitung 21 durch das flüssige Reduktionsmittel 2 gewählt. Bei dieser Konstruktion ist die Zuleitung 21 ausreichend stabil bzw. flexibel ausgeführt, so dass sie die beim Einfrieren des Reduktionsmittels 2 auftretenden Belastungen ertragen kann. Darüber hinaus kann die Zuleitung 21 gemäß den Fig. 5 und 6 auch dehnbar sein, damit sie sich verlängern kann, um nicht beschädigt zu werden. Vorzugsweise kann die Zuleitung 21 sich um mindestens 10 %, vorzugsweise mindestens 15 %, reversibel dehnen.

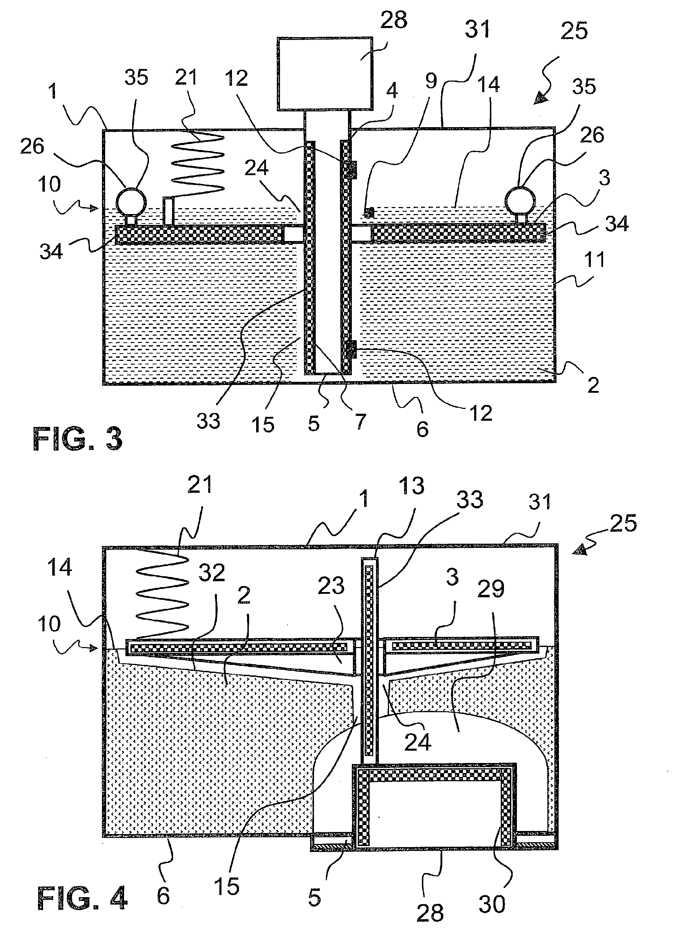

Gemäß den Fig. 1 bis 3 ist die Dosiereinheit 28 an einer Oberseite 31 des Reduktionsmitteltankes 1 angeordnet. Von der Entnahmestelle 5 gelangt das Reduktionsmittel 2 über ein Entnahmerohr 4 zu der Dosiereinheit 28. Bei den Ausführungsvarianten der Fig. 4, 5 und 7 ist die Dosiereinheit 28 in der Nähe des Tankbodens 6 angeordnet. Die Dosiereinheit 28 ist dabei in unmittelbarer Nähe der Entnahmestelle 5 angeordnet. Bei diesen Ausführungsvarianten entfällt das Entnahmerohr 4. Die Fig. 6 offenbart eine schwimmende Variante der Dosiereinheit 28 im Reduktionsmitteltank 1. Hier ist die Entnahmestelle 5 an der Dosiereinheit 28 und nicht in der Nähe des Tankbodens 6 angeordnet und gemeinsam mit der Dosiereinheit 28 im Reduktionsmitteltank 1 beweglich. Die Dosiereinheit 28 umfasst bevorzugt zumindest eine Pumpe, ein Ventil und/oder einen Filter, durch die das entnommene Reduktionsmittel 2 hindurch strömt.

Den Ausführungsvarianten der erfindungsgemäßen Vorrichtung gemäß den Fig. 1 bis 3 mit der Anordnung der Dosiereinheit 28 an der Oberseite 31 des Reduktionsmitteltankes 1 ist gemein, dass am Entnahmerohr 4 Heizelemente 7 angeordnet sind. Diese stellen eine Belüftungsheizung 33 dar. Durch diese Belüftungsheizung 33 kann in gefrorenem Reduktionsmittel 2 ein Kanal 15 von der Heizung 3 zur Entnahmestelle 5 aufgetaut werden.

Bei den in den Fig. 1 bis 3 dargestellten Ausführungsvarianten kann mit der Heizung 3 zugleich auch eine Bestimmung des Füllstandes 10 im Reduktionsmitteltank 1 durchgeführt werden. An der Heizung 3 ist dazu eine erste Komponente 9 zur Füllstandsbestimmung befestigt. Die erste Komponente 9 wirkt mit zweiten Komponenten 12 zusammen, die gemäß den Fig. 1 bis 3 jeweils beispielhaft an dem Entnahmerohr 4 befestigt sind. Die zweiten Komponenten 12 können auch an einer Tankwand 11 befestigt sein. Dies ist insbesondere bei den Varianten der Vorrichtung 25 ohne Entnahmerohr 4 sinnvoll. Über das Zusammenwirken der ersten Komponente 9 sowie der zweiten Komponenten 12 kann der Füllstand 10 im Reduktionsmitteltank 1 ermittelt werden. Dies kann beispielsweise über einen elektrisch leitfähigen Kontakt zwischen der ersten Komponente 9 und den zweiten Komponenten 12 über ein magnetisches Feld oder eine ähnliche Technik zur Füllstandsbestimmung erfolgen. Es können auch andere Verfahren zur Bestimmung der Position eines Schwimmers in einem Gefäß eingesetzt werden.

In Fig. 1 ist weiterhin dargestellt, dass die Heizung 3 an einer Führungsstruktur 13 im Reduktionsmitteltank 1 geführt wird. So kann verhindert werden, dass die Heizung 3 sich im Reduktionsmitteltank 1 unkontrolliert bewegt. Auch die Ausführungsvariante gemäß der Fig. 4 hat eine derartige Führungsstruktur 13 für die Heizung 3.

Darüber hinaus ist dargestellt, dass die Heizung 3 Rippen 23 aufweist, durch welche beim Heizen die gefrorene Reduktionsmitteloberfläche 14 so geformt werden kann, dass eine geeignete Ablauffläche 32 für Reduktionsmittel 2 zur Entnahmestelle 5 und/oder zum Eingang 24 des Kanals 15 erzeugt wird.

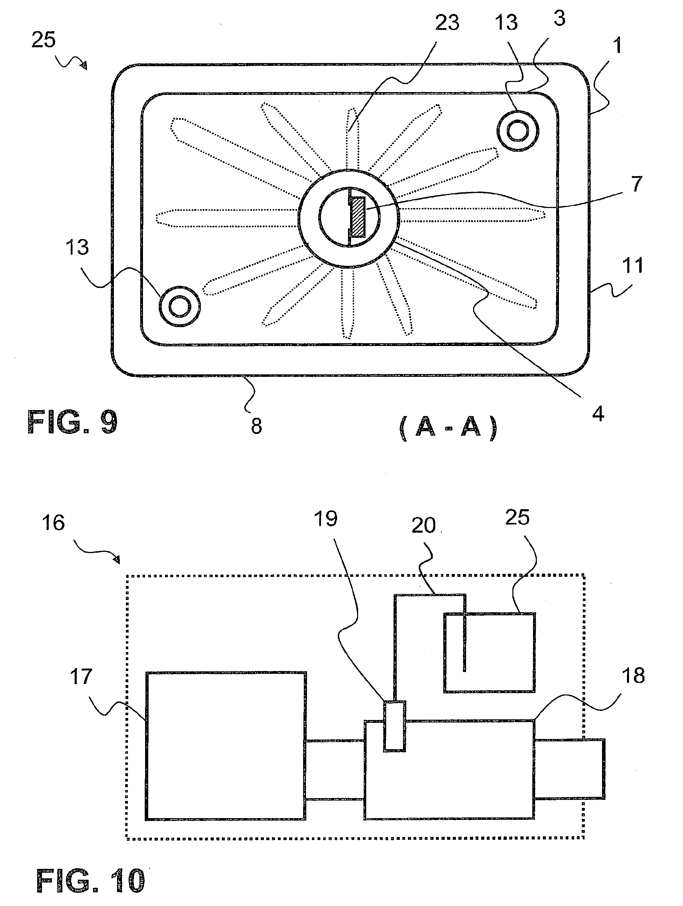

Zum besseren Verständnis der Wirkungsweise der Führungsstruktur 13 und der Rippen 23 ist die Ausführungsvariante gemäß Fig. 1 in Fig. 9 noch einmal aus einer anderen Perspektive dargestellt. Fig. 9 zeigt einen Schnitt von oben durch diese Ausführungsvariante. Zu erkennen sind die Führungsstrukturen 13 zur Führung der Heizung 3. Auch zu erkennen ist der Reduktionsmitteltank 1, in welchem die Heizung 3 durch die Führungsstruktur 13 geführt wird. Die Heizung 3 erstreckt sich über die Querschnittsfläche 8 des Reduktionsmitteltankes 1 zu einem Anteil von mehr als 50 %. Weiterhin zu erkennen ist das Entnahmerohr 4 mit dem Heizelement 7. Auf der Heizung 3 sind die Rippen 23 derart angeordnet, dass Reduktionsmittel 2 auch bei einer Schräglage der Vorrichtung 25 in Richtung zur Entnahmestelle 5 fließen kann.

Zur Erzeugung einer derartigen Ablauffläche 32 auf der gefrorenen Reduktionsmitteloberfläche 14 ist die Heizung 3 gemäß der Fig. 2 trichterförmig geformt. Es ist auch möglich beide Merkmale zu kombinieren. Die Heizung 3 kann dann trichterförmig sein und zusätzlich Rippen 23 aufweisen.

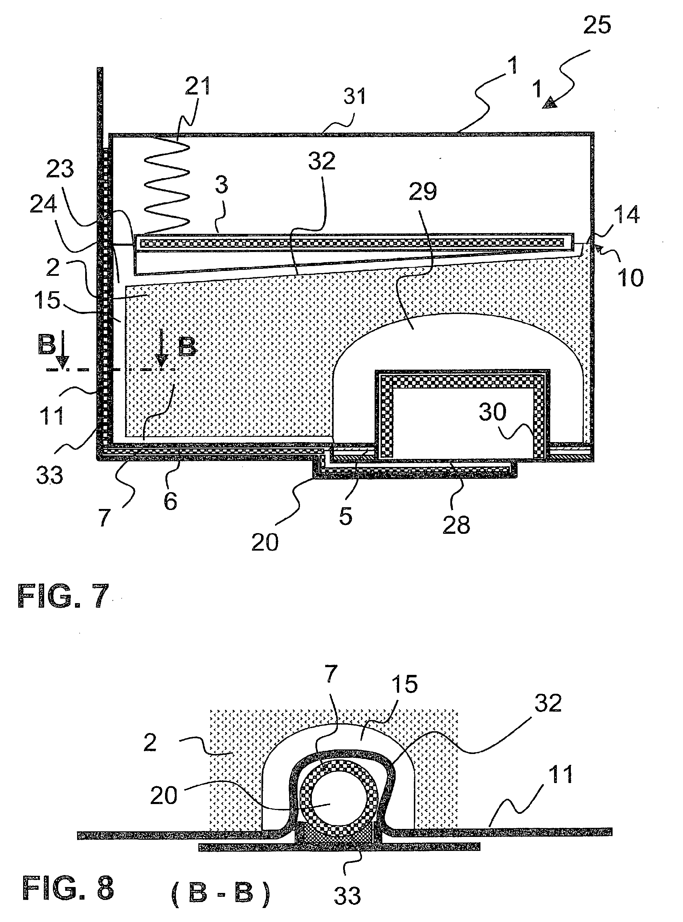

Auch die vierte Ausführungsvariante gemäß Fig. 4 weist derartige Rippen 23 an der Heizung 3 auf. Genauso hat auch die Heizung 3 gemäß der siebten Ausführungsvariante (Fig. 7) Rippen 23, die eine geeignete Ablauffläche 32 auf der gefrorenen Reduktionsmitteloberfläche 14 erzeugen können.

Gemäß der dritten Ausführungsvariante der Vorrichtung in Fig. 3 weist die Heizung 3 Schwimmer 26 auf. Diese Schwimmer 26 gewährleisten, dass die Heizung 3 in einer definierten Position zumindest teilweise unterhalb der Reduktionsmitteloberfläche 14 angeordnet ist. Die Heizung 3 ist insbesondere so gestaltet, dass sie einen Heizabschnitt 34 und einen Auftriebsabschnitt 35 aufweist. Der von den Schwimmern 26 gebildete Auftriebsabschnitt 35 stellt die richtige Position der Heizung 3 im Reduktionsmittel 2 sicher. Durch die so vorgegebene Position der Heizung 3 ist der Heizabschnitt 34 von Reduktionsmittel 2 bedeckt und es wird eine besonders effiziente Wärmeeinbringung von der Heizung 3 in das Reduktionsmittel 2 gewährleistet. Bevorzugt ist, dass sich diese schwimmende Heizung nicht mehr als 5 Zentimeter von der Reduktionsmitteloberfläche 14 entfernt.

Bei den Ausführungsvarianten gemäß den Fig. 4, 5 und 7 mit der Dosiereinheit 28 am Tankboden 6 ist jeweils eine Systemheizung 30 vorgesehen, durch welche Reduktionsmittel 2 außen an der Dosiereinheit 28 aufgeschmolzen werden kann. Die Systemheizung 30 kann zudem in gefrorenem Reduktionsmittel 2 eine Eishöhle 29 rund um die Dosiereinheit 28 erzeugen. Wenn in der Eishöhle 29 kein flüssiges Reduktionsmittel 2 mehr vorliegt, stellt die Eishöhle 29 eine Wärmeisolierung der Dosiereinheit 28 gegenüber dem restlichen Reduktionsmittel 2 im Reduktionsmitteltank 1 dar. Dies kann passieren, wenn die Dosiereinheit 28 das flüssige Reduktionsmittel 2 schneller fördert als die Systemheizung 30 das Reduktionsmittel 2 schmelzen kann. Die Eishöhle 29 kann so verhindern, dass die Systemheizung 30 gefrorenes Reduktionsmittel 2 schmelzen kann. Aus diesem Grunde ist die bewegliche Heizung 3 im Reduktionsmitteltank 1 bei den Ausführungsvarianten gemäß den Figuren 4, 5 und 7 der Vorrichtung 25 mit der am Tankboden 6 angeordneten Dosiereinheit 28 besonders vorteilhaft.

Gemäß der Ausführungsvariante in Fig. 4 ist die Belüftungsheizung 33 durch eine stabförmige Führungsstruktur 13 gebildet, die sich von der Dosiereinheit 28 weg erstreckt. Entlang der Führungsstruktur 13 wird durch die Belüftungsheizung 33 ein Kanal 15 ausgebildet.

Bei der siebten Ausführungsvariante (Fig. 7) ist die Belüftungsheizung 33 zur Ausbildung eines Kanals 15 von der Heizung 3 zu der Entnahmestelle 5 durch eine außen an der Tankwand 11 angebrachte Reduktionsmittelleitung 20 gewährleistet. Diese Reduktionsmittelleitung 20 dient zur Förderung des Reduktionsmittels 2 von der Dosiereinheit 28 zu einer Abgasbehandlungsvorrichtung im Abgassystem einer Verbrennungskraftmaschine. Die Reduktionsmittelleitung 20 ist beispielsweise als beheizbarer Schlauch mit Heizelementen 7 ausgeführt. Die Reduktionsmittelleitung 20 bildet so eine Belüftungsheizung 33 zur Ausbildung eines Kanals 15 von der Heizung 3 zur Entnahmestelle 5, die unabhängig von der Bauform des Reduktionsmitteltankes 1 sehr einfach zu realisieren ist.

Fig. 8 zeigt die außen an der Tankwand 11 angebrachte Reduktionsmittelleitung 20 nochmals im Detail. Diese Reduktionsmittelleitung 20 weist Heizelemente 7 auf, durch welche ein Kanal 15 im Reduktionsmittel 2 auf der Innenseite der Tankwand 11 erzeugt werden kann.

Gemäß der Ausführungsvariante nach Fig. 5 sind mehrere Heizungen 3 im Reduktionsmitteltank 1 vorgesehen. Die Heizungen 3 schwimmen in einem vorgegebenen Bewegungsradius relativ frei beweglich im Reduktionsmittel 2. Die Heizungen 3 gemäß Fig. 5 können verschiedene Ausgestaltungen aufweisen. Gemäß der links dargestellten Variante weist die Heizung 3 einen Schwimmer 26 auf und ist somit in einen Auftriebsabschnitt 35 und in einen Heizabschnitt 34 aufgeteilt. So ist gewährleistet, dass der Heizabschnitt 34 jeweils komplett von Reduktionsmittel 2 umgeben ist und so ein besonders effizienter Wärmeeintrag in das Reduktionsmittel 2 erfolgt. Die mittlere Heizung 3 in Fig. 5 weist eine Dämpfung 27 auf. Dies kann beispielsweise eine elastische poröse Schicht sein, mit der von außen einwirkende Stöße gedämpft werden. Durch diese Schicht wird sichergestellt, dass durch die Bewegung der Heizung 3 im Reduktionsmitteltank 1 keine Geräusche oder Schäden entstehen. Die in Fig. 5 rechts dargestellte Ausführungsvariante der Heizung 3 weist keine derartigen Merkmale auf. Die Heizungen 3 sind gemäß der Fig. 3 jeweils als kugelförmige Schwimmer ausgeführt. Es sind aber auch beliebige andere Formen möglich. Beispielsweise kann auch mindestens eine frei bewegliche flächige Heizung 3 vorliegen.

Bei den Heizungen 3 gemäß Fig. 5 ist jeweils eine elektrische Zuleitung 21 vorgesehen, die sich durch das Reduktionsmittel 2 erstreckt. Wie bereits ausgeführt, müssen diese Zuleitungen 21 ausreichend stabil und/oder dehnbar sein. Die Zuleitungen 21 weisen elektrische Leitungen zur Versorgung der Heizung 3 auf. Gleichzeitig weisen die Zuleitungen 21 Belüftungsheizungen 33 auf. Die Belüftungsheizungen 33 schmelzen entlang der Zuleitungen 21 Kanäle 15 von den Heizungen 3 zu der Entnahmestelle 5 frei. Die elektrischen Leitungen können auch zugleich die Belüftungsheizung 33 bilden.

Die Ausführungsvariante der Vorrichtung gemäß Fig. 6 weist eine Dosiereinheit 28 auf, die als Ganzes schwimmend im Reduktionsmitteltank 1 angeordnet ist. Diese Dosiereinheit 28 hat eine Systemheizung 30 zum Auftauen von Reduktionsmittel 2. Diese Systemheizung 30 bildet zugleich die bewegliche aktive Heizung 3. Die Dosiereinheit 28 kann sich bei Absenkung der Reduktionsmitteloberfläche 14 im Reduktionsmitteltank 1 ebenfalls absenken. Damit ist die Heizung 3 auch beweglich. Durch die Heizung 3 wird eine Eishöhle 29 in die Reduktionsmitteloberfläche 14 geschmolzen. Die Dosiereinheit 28 und die Heizung 3 können in diese Eishöhle 29 absinken. Bei der Ausführungsvariante gemäß Fig. 6 weisen die Dosiereinheit 28 und die Heizung 3 auch eine Führungsstruktur 13 auf, die zugleich auch die Zuleitung 21 für die Heizung 3 darstellt. An der Führungsstruktur 13 ist bei der Ausführungsvariante gemäß der Fig. 6 auch die Reduktionsmittelleitung 20 zur Ableitung des Reduktionsmittels 2 aus der Vorrichtung 25 vorgesehen.

Fig. 10 zeigt ein erfindungsgemäßes Kraftfahrzeug 16, aufweisend eine Verbrennungskraftmaschine 17 sowie eine Abgasbehandlungsvorrichtung 18 zur Behandlung der Abgase der Verbrennungskraftmaschine 17. Die Abgasbehandlungsvorrichtung 18 weist eine Zufuhr 19 auf. Die Zufuhr 19 ist über eine Reduktionsmittelleitung 20 mit der Vorrichtung 25 verbunden und wird über die Reduktionsmittelleitung 20 von der Vorrichtung 25 mit Reduktionsmittel versorgt. So kann das Reduktionsmittel 2 bedarfsgerecht dem Abgas zugegeben und eine Reinigung des Abgases nach dem so genannten SCR-Verfahren erreicht werden.

### Bezugszeichenliste

- 1: Reduktionsmitteltank
- 2: Reduktionsmittel
- 3: Heizung
- 4: Entnahmerohr
- 5: Entnahmestelle
- 6: Tankboden
- 7: Heizelement
- 8: Querschnittsfläche
- 9: erste Komponente
- 10: Füllstand
- 11: Tankwand
- 12: zweite Komponente
- 13: Führungsstruktur
- 14: Reduktionsmitteloberfläche
- 15: Kanal
- 16: Kraftfahrzeug
- 17: Verbrennungskraftmaschine
- 18: Abgasbehandlungsvorrichtung
- 19: Zufuhr
- 20: Reduktionsmittelleitung
- 21: Zuleitung
- 22: Schutzvorrichtung
- 23: Rippe
- 24: Eingang
- 25: Vorrichtung
- 26: Schwimmer
- 27: Dämpfung
- 28: Dosiereinheit
- 29: Eishöhle
- 30: Systemheizung
- 31: Oberseite
- 32: Ablauffläche
- 33: Belüftungsheizung
- 34: Heizabschnitt
- 35: Auftriebsabschnitt

## Patentansprüche

1. Vorrichtung (25) zur Bereitstellung eines flüssigen Reduktionsmittels (2), umfassend einen Reduktionsmitteltank (1) zur Bevorratung des flüssigen Reduktionsmittels (2) mit einer Entnahmestelle (5) zur Entnahme von flüssigem Reduktionsmittel (2) aus dem Reduktionsmitteltank (1), welcher mindestens eine Heizung (3) aufweist, wobei die mindestens eine Heizung (3) beweglich in dem Reduktionsmitteltank (1) angeordnet und als aktive Heizung (3) ausgeführt ist, wobei die mindestens eine Heizung (3) als Schwimmkörper ausgeführt ist. **dadurch gekennzeichnet, dass** die Vorrichtung (25) eine aktive Belüftungsheizung (33) zur Ausbildung eines Kanals (15) zwischen der mindestens einen Heizung (3) und der Entnahmestelle (5) für Reduktionsmittel (2) aufweist, wobei die Entnahmestelle (5) fest in der Nähe des Tankbodens (6) in dem Reduktionsmitteltank (1) positioniert ist.

2. Vorrichtung (25) nach einem der vorhergehenden Patentansprüche, wobei die mindestens eine Heizung (3) zumindest einen Heizabschnitt (34) und zumindest einen Auftriebsabschnitt (35) aufweist.

3. Vorrichtung (25) nach Patentanspruch 2, wobei die mindestens eine Heizung (3) eine Zuleitung (21) zur Versorgung der mindestens einen Heizung (3) mit Energie aufweist, wobei an der Zuleitung (21) ebenfalls eine aktive Belüftungsheizung (33) vorgesehen ist.

4. Vorrichtung (25) nach einem der vorhergehenden Patentansprüche, wobei an der mindestens einen Heizung (3) mindestens eine Komponente (9) zur Detektierung des Füllstandes (10) des Reduktionsmittels (2) im Reduktionsmitteltank (1) vorgesehen ist.

5. Vorrichtung (25) nach einem der vorhergehenden Patentansprüche, wobei im Reduktionsmitteltank (1) eine Führungsstruktur (13) für die mindestens eine Heizung (3) vorgesehen ist, entlang welcher die Tankheizung (3) bewegbar ist.

6. Vorrichtung nach einem der vorhergehenden Patentansprüche, wobei die mindestens eine Heizung (3) derart angeordnet oder geformt ist, dass im Betrieb auf einer gefrorenen Reduktionsmitteloberfläche (14) eine Ablauffläche (32) für abgetautes Reduktionsmittel (2) gebildet wird.

7. Verfahren zum Auftauen von gefrorenem Reduktionsmittel (2) in einem Reduktionsmitteltank (1) mit der Vorrichtung nach einem der Patentansprüche 1 bis 6, aufweisend zumindest folgende Schritte:
a) Bewegliches Anordnen mindestens einer aktiven Heizung (3) nahe einer Reduktionsmitteloberfläche (14);
b) Aktivieren der mindestens einen Heizung (3), wenn das Reduktionsmittel (2) an der Reduktionsmitteloberfläche (14) gefroren ist;
c) Abtauen von Reduktionsmittel (2) an der Reduktionsmitteloberfläche (14) und Bewegen der mindestens einen Heizung (3); und
d) Zuführen des abgetauten Reduktionsmittels (2) zu einer Entnahmestelle (5) für das Reduktionsmittel (2),
**dadurch gekennzeichnet, dass** eine aktive Belüftungsheizung (33) der Vorrichtung (25) einen Kanal (15) zwischen der mindestens einen Heizung (3) und der Entnahmestelle (5) für Reduktionsmittel (2) ausbildet wobei die Entnahmestelle (5) fest in der Nähe des Tankbodens (6) in dem Reduktionsmitteltank (1) positioniert ist.

8. Kraftfahrzeug (16), aufweisend eine Verbrennungskraftmaschine (17) und eine Abgasbehandlungsvorrichtung (18), aufweisend eine Zufuhr (19) für Reduktionsmittel (2) sowie eine Vorrichtung (25) nach einem der Patentansprüche 1 bis 6.

## Claims

1. Device (25) for providing a liquid reducing agent (2), comprising a reducing agent tank (1) for storing the liquid reducing agent (2) having an extraction point (5) for extracting liquid reducing agent (2) from the reducing agent tank (1), which comprises at least one heater (3), wherein the at least one heater (3) is arranged in a movable manner in the reducing agent tank (1) and is configured as an active heater (3), wherein the at least one heater (3) takes the form of a float, **characterized in that** the device (25) comprises an active vent heater (33) for forming a channel (15) between the at least one heater (3) and the extraction point (5) for reducing agent (2), wherein the extraction point (5) is fixedly positioned in the reducing agent tank (1) in the vicinity of the tank bottom (6).

2. Device (25) as claimed in one of the preceding claims, wherein the at least one heater (3) comprises at least one heating portion (34) and at least one buoyancy portion (35).

3. Device (25) as claimed in claim 2, wherein the at least one heater (3) comprises a supply line (21) for supplying the at least one heater (3) with energy, wherein an active vent heater (33) is likewise provided on the supply line (21).

4. Device (25) as claimed in one of the preceding claims, wherein at least one component (9) is provided on the at least one heater (3) for detecting the filling level (10) of the reducing agent (2) in the reducing agent tank (1).

5. Device (25) as claimed in one of the preceding claims, wherein a guide structure (13) is provided in the reducing agent tank (1) for the at least one heater (3), along which the at least one tank heater (3) may be moved.

6. Device as claimed in one of the preceding claims, wherein the at least one heater (3) is arranged or shaped in such a way that, when it is in operation on a frozen reducing agent surface (14), a run-off surface (32) is formed for thawed reducing agent (2).

7. Method for thawing frozen reducing agent (2) in a reducing agent tank (1) by means of the device as claimed in one of claims 1 to 6, comprising at least the following steps:
a) arranging at least one active heater (3) in a movable manner close to a reducing agent surface (14);
b) activating the at least one heater (3), if the reducing agent (2) is frozen at the reducing agent surface (14);
c) thawing reducing agent (2) at the reducing agent surface (14) and moving the at least one heater (3); and
d) feeding the thawed reducing agent (2) to an extraction point (5) for the reducing agent (2),
**characterized in that** an active vent heater (33) of the device (25) forms a channel (15) between the at least one heater (3) and the extraction point (5) for reducing agent (2), wherein the extraction point (5) is fixedly positioned in the reducing agent tank (1) in the vicinity of the tank bottom (6).

8. Motor vehicle (16), comprising an internal combustion engine (17) and an exhaust gas treatment device (18), comprising a feed (19) for reducing agent (2) and a device (25) as claimed in one of claims 1 to 6.

## Revendications

1. Dispositif (25) pour la production d'un agent réducteur liquide (2), comportant un réservoir d'agent réducteur (1) pour le stockage de l'agent réducteur liquide (2) avec un point de prélèvement (5) pour le prélèvement d'agent réducteur liquide (2) à partir du réservoir d'agent réducteur (1), lequel comprend au moins un dispositif de chauffage (3), l'au moins un dispositif de chauffage (3) étant disposé de manière mobile dans le réservoir d'agent réducteur (1) et étant réalisé sous forme de dispositif de chauffage actif (3), l'au moins un dispositif de chauffage (3) étant réalisé sous forme de corps flottant, **caractérisé en ce que** le dispositif (25) comprend un dispositif de chauffage de ventilation actif (33) pour réaliser un canal (15) entre l'au moins un dispositif de chauffage (3) et le point de prélèvement (5) pour l'agent réducteur (2), le point de prélèvement (5) étant positionné de manière fixe à proximité du fond de réservoir (6) dans le réservoir d'agent réducteur (1).

2. Dispositif (25) selon l'une quelconque des revendications précédentes, dans lequel l'au moins un dispositif de chauffage (3) comprend au moins une partie de chauffage (34) et au moins une partie de flottabilité (35).

3. Dispositif (25) selon la revendication 2, dans lequel l'au moins un dispositif de chauffage (3) comprend une ligne d'alimentation (21) pour l'alimentation en énergie de l'au moins un dispositif de chauffage (3), un dispositif de chauffage de ventilation actif (33) étant également prévu sur la ligne d'alimentation (21).

4. Dispositif (25) selon l'une quelconque des revendications précédentes, dans lequel au moins un composant (9) pour la détection du niveau de remplissage (10) de l'agent réducteur (2) dans le réservoir d'agent réducteur (1) est prévu sur l'au moins un dispositif de chauffage (3).

5. Dispositif (25) selon l'une quelconque des revendications précédentes, dans lequel une structure de guidage (13) pour l'au moins un dispositif de chauffage (3) est prévue dans le réservoir d'agent réducteur (1), le long de laquelle le dispositif de chauffage de réservoir (3) peut être déplacé.

6. Dispositif selon l'une quelconque des revendications précédentes, dans lequel l'au moins un dispositif de chauffage (3) est disposé ou formé de telle sorte que, lors du fonctionnement, une surface d'écoulement (32) pour de l'agent réducteur dégelé (2) soit formée sur une surface d'agent réducteur gelée (14).

7. Procédé de dégel d'agent réducteur gelé (2) dans un réservoir d'agent réducteur (1) comprenant le dispositif selon l'une quelconque des revendications 1 à 6, comprenant au moins les étapes suivantes :
a) agencement de manière mobile d'au moins un dispositif de chauffage actif (3) à proximité d'une surface d'agent réducteur (14) ;
b) activation de l'au moins un dispositif de chauffage (3) lorsque l'agent réducteur (2) est gelé sur la surface d'agent réducteur (14) ;
c) dégel de l'agent réducteur (2) sur la surface d'agent réducteur (14) et déplacement de l'au moins un dispositif de chauffage (3) ; et
d) amenée de l'agent réducteur dégelé (2) jusqu'à un point de prélèvement (5) pour l'agent réducteur (2),
**caractérisé en ce qu'**un dispositif de chauffage de ventilation actif (33) du dispositif (25) réalise un canal (15) entre l'au moins un dispositif de chauffage (3) et le point de prélèvement (5) pour l'agent réducteur (2), le point de prélèvement (5) étant positionné de manière fixe à proximité du fond de réservoir (6) dans le réservoir d'agent réducteur (1).

8. Véhicule automobile (16), comprenant un moteur à combustion interne (17) et un dispositif de traitement des gaz d'échappement (18), comportant une alimentation (19) pour un agent réducteur (2) ainsi qu'un dispositif (25) selon l'une quelconque des revendications 1 à 6.
